# EUROPEAN PATENT APPLICATION

(11) **EP 4 276 131 A1**
(43) Date of publication of application: **15.11.2023**
(21) Application number: 22172425.5
(22) Date of filing: 10.05.2022
(51) Int. Cl.: C08G 63/183, C08J 11/24

(54) **METHOD FOR THE PREPARATION OF A POLYESTER**

(71) Applicant: Polymetrix AG, 9245 Oberbüren (CH)
(72) Inventor: CHRISTEL, Andreas, 9524 Zuzwil (CH); MATTES, Kurt Michael, 9242 Oberuzwil (CH)
(74) Representative: Hepp Wenger Ryffel AG

(57) **Abstract**

The present invention is related to a method for the preparation of a polyester, comprising the steps of providing a monomer slurry from a recycled monomer product and at least one diacid monomer, where the monomer product contains 50%-100% of a condensation monomer, and using the monomer slurry for the polymerization of a polyester, wherein the step of preparing said monomer slurry is executed in a way that allows to maintain the monomer slurry in liquid form. The present invention is furthermore related to solid particles comprising a recycled monomer product and a diacid monomer B at a mole ratio of B'' units -OC-R²-CO- to diacid HOOC-R²-COOH in the range of 5:1 to 1:5.

## Description

The present invention is related to a method and a plant for monomer recycling from a condensation polymer which is a polyester.

The preparation of polymers from their monomers is well known and established in large scale. Traditionally the used monomers are derived from fossil resources. The use of fossil resources is based on a linear product flow from fossil resource to polymer to waste. In the long term such linear product flows are not sustainable. As an alternative, the use of monomers derived from renewable resources is proposed to create a more cyclic product flow. However, the resulting cycle from polymer to CO₂ and water to plant based renewable resources to polymer is a long and energy intensive approach to provide polymers.

Especially condensation polymers have the advantage that they can be depolymerized into their monomers and re-polymerized from such recycled monomers. Depending on the depolymerisation technology, the same monomers may be obtained that are typically used for the preparation of virgin polymers. In other cases, the recycled monomers may have a different composition and therefore are limited in their use in existing large-scale manufacturing processes. Such limiting differences may be the melting point of a solid monomer, the viscosity of a liquid monomer or the required energy to melt or evaporate the monomers. In particular, differences result from predefined mole ratios of reacted monomers.

Polyesters have a general structure comprising repeat units. They are typically prepared in large scale by polymerizing monomers with each other, wherein said monomers are diols and diacids.

Polyesters are typically prepared in large scale by polymerizing a diol monomer with a substituted diacid monomer. Alternatively, the polyesters can be prepared in large scale by polymerizing cyclic dimers, trimers or oligomers obtained from diol and diacid monomers. Due to ring opening polymerization, a polyester is formed.

These polyesters can be recycled by depolymerization with the addition of a diol monomer. The depolymerization results in a recycled monomer product comprising a condensation monomer having the formula HO-R¹-OOC-R²-COO-R¹-OH, wherein R¹ and R₂ are as defined below. The condensation monomer can be introduced into a conventional polyester preparation process starting from the diol and diacid monomers.

However, the addition of the recycled monomer product shifts the mole ratio of total A and B units defined below. Therefore, the amount of individual diol monomer A has to be reduced and/or the amount of individual diol monomer A that is evaporated from the process has to be increased. Both is possible in a conventional polyester preparation process, but only to a limited degree as the heating capacity for evaporation is limited and the viscosity of the monomer feed changes if the ratio of individual diol monomer A to individual diacid monomer B is lowered.

It was the problem of the present invention to provide a polymerization method and a polymerization plant designed for using recycled monomers as they are obtained from depolymerization, for the preparation of polyesters, and therewith provide an efficient recycling loop for polyesters.

This problem is solved by the subject-matter of the independent claims.

The following designations will be used herein for the condensation polymers, their depolymerization products and their monomers.

**Monomer:** A general term for building blocks of polymers. For condensation polymers, monomers comprise individual monomers, substituted monomers and condensation monomers.

**Individual monomer:** The basic building blocks of the polymer in unreacted form. According to the present invention, monomer A is a diol having the formula HO-R¹-OH and monomer B is a diacid having the general formula HOOC-R²-COOH, wherein R¹ and R² throughout this specification are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms or heterocyclic rings containing 1 to 3 oxygen atoms and 3 to 10 carbon atoms.

**Substituted monomer:** A monomer C obtained as a condensation product of individual monomer B HOOC-R²-COOH with two terminating molecules R³-OH, which will not form a part of the repeat unit of the related condensation polymer, i.e. the terminating molecules will be eliminated during the polycondensation reaction which results in a condensation polymer, and wherein R³ are aliphatic hydrocarbons containing 1 to 15 carbon atoms. According to the present invention, substituted monomer C has the formula R³OOC-R²-COOR₃. In one embodiment, the terminating molecules R³-OH may be methanol, so that the resulting substituted monomer C is H₃COOC-R²-COOCH₃.

**Condensation monomer:** A short condensation product from both individual monomers A and B, with the formula A'-B"-A', wherein A' and B" have the below definitions. More specifically, the condensation monomer A'-B"-A' is HO-R¹-OOC-R²-COO-R¹-OH, wherein R¹ and R² are as defined above.

**Reacted monomer:** A building block of the polymer in reacted form in any larger molecule. Possible forms are A', A", B' and B", with A' being identical to H'-A" and B' being identical to H'-B".

According to the present invention
an **A' unit** represents a reacted monomer A which is a diol with 1 reacted end group and one unreacted -OH end group and having the formula HO-R¹-O-;
an **A" unit** represents a reacted monomer A which is a diol with 2 reacted end groups and having the formula -O-R¹-O-,
the **reacted A units** represent the sum of all reacted monomer units A' and A" and
the **total A units** represent the sum of all reacted and unreacted monomer units A, A' and A".

According to the present invention
a **B' unit** represents a reacted monomer B which is a diacid with 1 reacted end group and one unreacted -COOH end group and having the formula HOOC-R²-CO-;
a **B" unit** represents a reacted monomer B with 2 reacted end groups, preferably a diacid with 2 reacted end groups and having the formula -OC-R²-CO-, wherein
the **reacted B units** represent the sum of all reacted monomer units B' and B" and
the **total B units** represent the sum of all reacted and unreacted monomer units B, B' and B".

For example, the total B units is the total amount of B units in a given product and is the molar sum of all molecules containing a B unit multiplied by the number of B units in the respective molecules. For example, a product containing monomers B and A'-B"-A' as well as dimer A'-B"-A"-B"-A' has a total amount of B units = mol B + 1 * mol A'-B"-A' + 2 * mol A'-B"-A"-B"-A'.

The following terms comprise the listed mole amount per substance:

| | Individual monomer A | Individual monomer B | Monomer A' -B' | Monomer A'-B"-A' | Dimer A'-B"-A"-B"-A' |
|---|---|---|---|---|---|
| Individual monomer A HO-R¹-O-H | 1 | | | | |
| Individual monomer B HOOC-R²-COOH | | 1 | | | |
| A' units HO-R¹-O- | | | 1 | 2 | 2 |
| A" units -O-R¹-O- | | | | | 1 |
| reacted A units (A' + A") | | | 1 | 2 | 3 |
| Total A units (A + A' + A") | 1 | | 1 | 2 | 3 |
| B' units HOOC-R²-CO- | | | 1 | | |
| B" units | | | | 1 | 2 |
| -OC-R²-CO- | | | | | |
| reacted B units (B' + B") | | | 1 | 1 | 2 |
| total B units (B + B' + B") | | 1 | 1 | 1 | 2 |

**Repeat unit:** A condensation product from one of each individual monomer A and B. Possible forms are -A"-B"- having the formula [-O-R¹-OOC-R²-CO-], which would provide the repeating structure in the middle of a molecule, or A'-B"- and -B"-A', which would provide the structure at the end of a molecule. A single repeat unit is also present in the condensation monomer A'-B'.

**Dimer:** A condensation product of both individual monomers with two repeat units. Possible forms are A'-B"-A"-B"-A' and B'-A"-B"-A"-B'. The condensation product B'-A"-B"-A"-B' would be considered as a trimer.

**Trimer:** A condensation product of both individual monomers with three repeat units. Possible forms are H'[-A"-B"]₃-A' and H'[-A"-B"]₃-H'. The condensation product B' [-A"-B"]₃-H' would be considered as a tetramer.

**Oligomer:** A condensation product of both individual monomers A and B with several repeat units in the general form of E[-A"-B"]ₙ-E, where 3< n <=9, -A"-B"- has the formula [-O-R¹-OOC-R²-CO-] and E = H', A' or B'.

**Condensation Polymer:** A ccondensation product of both individual monomers with a large number of repeat units in the general form of E[-A"-B"]ₙ-E, where n >9, -A"-B"- has the formula [-O-R¹-OOC-R²-CO-] and E = H', A' or B'. According to the present invention, the condensation polymer is a polyester.

Specifically, the above problem is solved by a method for the preparation of a polyester with the repeat unit [-A"-B"] having the formula [-O-R¹-OOC-R²-CO-], comprising the steps:
a) providing a recycled monomer product, where the monomer product contains 50%-100% of condensation monomer having the formula HO-R¹-OOC-R²-COO-R¹-OH,
c) b) adding at least one diacid monomer B having the formula HOOC-R²-COOH to the recycled monomer product of step a), to obtain a monomer slurry, using the monomer slurry from step b) for the polymerization of a polyester with the repeat unit [-A"-B"] having the formula [-O-R¹-OOC-R²-CO-],
   wherein R¹ and R² are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms,
characterized in that the step of preparing said monomer slurry in step b) is executed in a way that allows maintaining the monomer slurry in liquid form.

The present invention furthermore provides recycled monomer products as they are obtained from depolymerization in a form that allows their efficient use in the preparation of polyesters and therefore create an efficient recycling loop for polyesters. Thus, the present invention further is related to solid particles comprising:
a. recycled monomer product, wherein the recycled monomer product contains 50-100 w-% of a condensation monomer having the formula HO-R¹-OOC-R²-COO-R¹-OH,
b. diacid monomer B having the formula HOOC-R²-COOH at a mole ratio of B" units -OC-R²-CO- to diacid HOOC-R²-COOH in the range of 5:1 to 1:5, wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms

Polyesters are obtained by a polycondensation reaction with elimination of a low molecular weight reaction product. The polycondensation can be effected directly between the monomers. The polycondensation may also be effected via an intermediate product, which is subsequently reacted by transesterification with elimination of a low molecular weight reaction product, or which is reacted by ring-opening polymerization.

The polyesters thus obtained have a substantially linear polymer chain. It is however possible for a small number of branches to form.

Preferred polyesters according to the present invention are thermoplastic polyesters.

Polyesters are polymers which are usually obtained by polycondensation from a diol component having the general formula HO-R¹-OH and a dicarboxylic acid component having the general formula HOOC-R²-COOH, where R¹ and R² are usually aliphatic hydrocarbons containing 1 to 15 carbon atoms, aromatic hydrocarbons containing 1 to 3 aromatic rings, cyclic hydrocarbons containing 4 to 10 carbon atoms or heterocyclic rings containing 1 to 3 oxygen atoms and 3 to 10 carbon atoms. Typically, linear or cyclic diol components and typically linear, aromatic, or heterocyclic dicarboxylic acid components are used. Instead of the dicarboxylic acid it is also possible to use its corresponding di-esters, typically its dimethyl ester. Preferred examples of such polyesters are polyethylene terephthalate (PET) which is typically obtained from terephthalic acid (TPA) and ethylene glycol (EG), polybutylene terephthalate (PBT) obtained from terephthalic acid (TPA) and 1,4-butylene diol (BD), polytrimethylene terephthalate (PTT) obtained from terephthalic acid (TPA) and 1,3-propane diol (PB), polyethylene furanoate (PEF) obtained from 2,5-furandicarboxylic acid (FDCA) and ethylene glycol (EG), polytrimethylene furanoate (PTF) obtained from 2,5-furandicarboxylic acid (FDCA) and propane diol (PB), polybutylene succinate (PBS) obtained from succinic acid (SA) and butane 1,4-diol (BD), polybutylene adipate (PBA) obtained from adipic acid (AdA) and 1,4-butane diol (BD), polybutylene adipate-terephthalate (PBAT) obtained from adipic acid (AdA) terephthalic acid (TPA) and 1,4-butane diol (BD) and polyethylene naphthalate (PEN) obtained from naphthalene-2,6-dicarboxylic acid and ethylene glycol, where all of the above polyesters may be present in the form of a homopolymer or as copolymers.

The present invention describes a method to prepare polyesters from their monomers, whereas at least one monomer is a recycled monomer product obtained from a polyester. The polyester prepared from said recycled monomer product and the polyester providing the source for the recycled monomer product may be identical or may differ in composition. The differences in composition may result from the use of different monomers and/or from the use of different amounts of common monomers when preparing said polyester. The differences in composition may also result from blends of different polyesters. In accordance with the present invention, at least one common monomer is present in the polyester providing the source of the recycled monomer product, and the polyester prepared form said recycled monomer product.

For example, a PET may be depolymerized using butane diol as a reaction partner, and the resulting recycled monomer product may be re-polymerized to form PBT. Alternatively, a PET copolymer with a high amount of diol comonomers may be depolymerized using ethylene glycol as a reaction partner, and the resulting recycled monomer product may be re-polymerized to form PET with a lower comonomer content.

Polyesters according to the present invention have a general structure comprising repeat units [A"-B"-] specifically having the formula [-O-R¹-OOC-R²-CO-]. These polyesters can be recycled by depolymerization with the addition of a diol monomer A having the formula HO-R¹-OH. The depolymerization results in a recycled monomer product comprising a condensation monomer, which as defined above is in the form of A'-B"-A' and specifically has the formula HO-R¹-OOC-R²-COO-R¹-OH.

The depolymerization can lead to various side products, including a side product with the general structure A'-B' specifically having the formula HO-R¹-OOC-R²-COOH, or diacid monomer B having the formula HOOC-R²-COOH, and partial depolymerization products, including dimers as well as oligomers.

Other variants of the above side products containing comonomers can be formed as well.

According to the present invention, the recycled monomer product comprises at least 50% of said condensation monomer in the form of A'-B"-A' and specifically having the formula HO-R¹-OOC-R²-COO-R¹-OH. Preferably, the recycled monomer product comprises at least 70%, more preferably at least 80% of said condensation monomer. The percentage is calculated as mole-% based on the total amount of B units.

In general, all monomer products containing more than 50% by weight of recycled monomer units are considered as recycled monomer products. Water or inert solvents which may optionally be present in the monomer product are not considered for the calculation.

Inert solvents are any liquids which dissolve or disperse at least a portion of a solid substance and do not or at least only to a small degree react with the solid substance at the temperature where the solution or dispersion is formed.

Preferably, monomer products containing more than 70% by weight of recycled monomer units are used in the method of the present invention.

For example, a polyester with the repeat units [A"-B"-] specifically having the formula [-O-R¹-OOC-R²-CO-] may be recycled, using a recycled diol monomer A specifically having the formula HO-R¹-OH for depolymerization, leading to a condensation monomer A'-B"-A' specifically having the formula [HO-R¹-OOC-R²-COOR¹-OH] which is obtained in the presence of water. All monomers units A' HO-R¹-O-) and all monomer units B" (-OC-R²-CO-) are recycled. For this calculation, the weight of the monomer units A' (HO-R¹-O-) and the weight of the monomer units B" (-OC-R²-CO-) is added and divided by the weight of the condensation monomer A'-B"-A' [HO-R¹-OOC-R²-COOR¹-OH]. The water is not considered. Monomer A specifically having the formula HO-R¹-OH is considered as recycled if it has been obtained from a polymer or any industrial process during which diol monomer A is formed from chemical substances having a higher molecular weight than monomer A. Recycling includes a case where monomer A is obtained by the polymerization of condensation monomer A'-B"-A' specifically having the formula [HO-R¹-OOC-R²-COOR¹-OH], during which elimination of the diol monomer A occurs, or where ethylene glycol monomer is recycled from a previous process where it had been used as a solvent.

For example, a polyester with the repeat units [A"-B"-] specifically having the formula [-O-R¹-OOC-R²-CO-] may be recycled, using a virgin diol monomer A specifically having the formula HO-R¹-OH for depolymerization, leading to a condensation monomer A'-B"-A' specifically having the formula [HO-R¹-OOC-R²-COOR¹-OH]. In this case, 50% of monomer units A' (HO-R¹-O-) and all monomer units B" (-OC-R²-CO-) are recycled. For this calculation, 50% of the weight of the monomer units A' (HO-R¹-O-) and the weight of the monomer units B" (-OC-R²-CO-) is added and divided by the weight of the condensation monomer A'-B"-A' [HO-R¹-OOC-R²-COOR¹-OH]. For this calculation, atoms that connect the groups A' and B" (specifically the connecting O atoms in the A' group) are divided equally to both units. In case of bis-hydroxyethyl-terephthalate (BHET) obtained from PET and virgin ethylene glycol as monomer A, the recycled content would be 79%.

Also, condensation monomer products in the form of A'-B"-A' specifically having the formula [HO-R¹-OOC-R²-COO-R¹-OH], which are obtained in an amount of more than 50% as a reaction product of a reaction involving recycled monomer A and/or recycled monomer B are considered as recycled monomer products.

For example, a polyester with the repeat units [A"-B"-] specifically having the formula [-O-R¹-OOC-R²-CO-] may be recycled using a monomer X for depolymerization leading to a monomer X'-B"-X'. Reacting monomer X'-B"-X' in a later step with virgin monomer A leads to a condensation monomer A'-B"-A' specifically having the formula [HO-R¹-OOC-R²-COO-R¹-OH]. All monomer units B" (-OC-R²-CO-) are recycled. For this calculation, the weight of the monomer units B" (-OC-R²-CO-) is divided by the weight of the condensation monomer A'-B"-A' [HO-R¹-OOC-R²-COO-R¹-OH]. For this calculation, atoms that connect the groups A' and B" (specifically the connecting O atoms in the A' group) are divided equally to both units. In case of bis-hydroxyethyl-terephthalate (BHET) obtained from PET and virgin ethylene glycol as monomer A, the recycled content would be 58%. However, if 50% of monomer A is from the depolymerization of the initial polymer, the recycled content is again 79%.

Typically the condensation monomer is solid at ambient conditions. Ambient conditions refer to normal temperature and pressure (293.15 K, absolute pressure 101.325 kPa). Typical condensation monomers have a melting point above 50°C. More typical is a melting point above 70°C. The melting point is the temperature where the pure condensation monomer melts. The actual temperature for melting the condensation monomer may be lower, as for example the presence of substances which are liquid at ambient conditions may reduce the melting temperature.

According to the present invention, the recycled monomer product is maintained in liquid form during the preparation of the monomer slurry.

A recycled monomer product with a melting temperature above ambient conditions requires heating, and accordingly in the method of the present invention such a recycled monomer product in liquid form is in a molten state. This may be obtained by melting a solid recycled monomer product obtained in a previous manufacturing step, or by supplying the recycled monomer product as a liquid from a previous manufacturing step in which conditions were applied under which the recycled monomer product is in a liquid state. Such a previous manufacturing step preferably comprises a depolymerization step of a polyester.

Such a previous manufacturing step mentioned above may take place in a different location or it may take place in the same location. If the previous manufacturing step takes place in a different location, then the recycled monomer product must be transported. Transporting includes any form where the monomer product is stationary in a transport container which is moved from one location to the other. This includes a transport in bins, containers or tanks.

If the previous manufacturing step takes place in the same location, then the recycled monomer product can preferably be conveyed from one reaction vessel to another. This includes moving by conveyer belts, bucket conveyors, chain conveyors, pneumatic conveying or pumping.

The recycled monomer product can be supplied at any temperature. It can be in solid or molten (i.e. liquid) state. If the recycled monomer product is supplied in solid form, it has to be melted to convert it to a suitable liquid form. The temperature of the recycled monomer product in liquid form is preferably at least 5°C, more preferably 15°C above the melting temperature of the recycled monomer product to prevent unwanted solidification. It is also preferable to keep the recycled monomer product at a temperature below the melting temperature of the polyester to be obtained from the recycled monomer product. As the recycled monomer product is used to prepare a slurry, it is preferable to maintain the temperature low enough to maintain sufficient viscosity to prevent the slurry from rapidly separating when not agitated.

According to the present invention, a diacid monomer B having the formula HOOC-R²-COOH is added to the recycled monomer product. The diacid monomer B may be added as a solid, preferably as a powder or fine granules. Typical particle sizes of the diacid monomer B to be used according to the present invention are in the range of 0.1 to 2000 µm, preferably 0.5 to 500 µm, while the median particle size is preferably in the range of 10 to 300 µm, preferably in the range of 30 to 200 µm. The median particle size (also called D₅₀ value) is the particle size from which half of the particles are smaller and half are larger.

Alternatively, a diacid monomer B having the formula HOOC-R²-COOH may be added to the recycled monomer product in a form dissolved or dispersed in a liquid, like water, diol or an inert solvent. However, the amount of liquid should be limited as water, inert solvents and excessive amounts of diol have to be evaporated before or during subsequent polymerization of the polyester. According to a preferred embodiment of the present invention, the diacid monomer B having the formula HOOC-R²-COOH which is used to prepare the monomer slurry is added without diol or with an amount of diol below the amount of diacid monomer B, wherein the calculation is based on the mole amounts of the respective components.

The diacid monomer B having the formula HOOC-R²-COOH should be added to the recycled monomer product in such a way that the recycled monomer product stays above its melting temperature. Therefore, the diacid monomer B is preferably either heated above the melting temperature of the recycled monomer product or, if added at a lower temperature, the recycled monomer product is heated sufficiently to prevent its solidification.

As the diacid monomer B is not soluble or only partially soluble in the recycled monomer product, a slurry is formed where solid particles of diacid monomer B are dispersed in the recycled monomer product.

The recycled monomer product should be sufficiently agitated to form a homogeneous slurry. The formation of agglomerates should be avoided.

According to the present invention, the amount of added diacid monomer B having the formula HOOC-R²-COOH depends on the amount of B" units (-OC-R²-CO-) and the amount of diacid monomer B having the formula HOOC-R²-COOH in the recycled monomer product.

The diacid monomer B having the formula HOOC-R²-COOH is preferably added in such a way that after its addition the slurry has a mole ratio of B" units (-OC-R²-CO-) to individual monomer B (HOOC-R²-COOH) in the range of 5:1 to 1:5. The amount of individual monomer B is the sum of individual monomer B in the recycled monomer product and the added individual monomer B. The amount of B" units in the slurry is equal to the B" units in the recycled monomer product.

If only incidental amounts of individual diacid monomer B (<1%) are present in the recycled monomer product, the calculation can be facilitated to be the ratio of B" units in the recycled monomer product to added individual diacid monomer B.

If the ratio of B" units (-OC-R²-CO-) to individual diacid monomer B (HOOC-R²-COOH) in the slurry is high, then a high amount of individual diol monomer A specifically having the formula HO-R¹-OH has to be evaporated during the preparation of the polyester.

For example, if 5 moles of condensation monomer A'-B"-A' having the formula HO-R¹-OOC-R²-COO-R¹-OH are combined with 1 mole of individual diacid monomer B (HOOC-R²-COOH), the complete polymerization will lead to A'-B"-[A"-B"]₅-A' specifically having the formula HO-R¹-OOC-R²-CO-[O-R¹-OOC-R²-CO]₅-O-R¹-OH and 3 moles of individual diol monomer A specifically having the formula HO-R¹-OH, and the latter will have to be evaporated during the preparation of the polyester.

If the ratio of B" units [-OC-R²-CO-] to individual diacid monomer B (HOOC-R²-COOH) in the slurry is lower, then a lower amount of individual diol monomer A specifically having the formula HO-R¹-OH has to be evaporated during the preparation of the polyester. For example, if 4 moles of condensation monomer A'-B"-A' having the formula HO-R¹-OOC-R²-COO-R¹-OH are combined with 2 mole of individual diacid monomer B (HOOC-R²-COOH), the complete polymerization will lead to A'-B"-[A"-B"-]₅-A' specifically having the formula HO-R¹-OOC-R²-CO-[O-R¹-OOC-R²-CO]₅-O-R¹-OH, and only 1 mole of individual diol monomer A specifically having the formula HO-R¹-OH, and the latter will have to be evaporated during the preparation of the polyester. As less individual monomer A has to be evaporated, less energy is consumed in the polymerization process. Therefore, it is advantageous to keep the mole ratio of B" units (-OC-R²-CO-) to individual monomer B (HOOC-R²-COOH) in the slurry below 4:1, preferably below 3:1 and more preferably below 2:1.

If the ratio of B" units (-OC-R²-CO-) to individual monomer B (HOOC-R²-COOH) is low, then a low amount of recycled condensation monomer A'-B"-A' having the formula HO-R¹-OOC-R²-COO-R¹-OH is used for the preparation of the polyester.

For example, if 1 mole of condensation monomer A'-B"-A' having the formula HO-R¹-OOC-R²-COO-R¹-OH is combined with 5 moles of individual diacid monomer B (HOOC-R²-COOH), the complete polymerization will lead to A'-B"-[A"-B"-]₅-A' specifically having the formula HO-R¹-OOC-R²-CO-[O-R¹-OOC-R²-CO]₅-O-R¹-OH. This requires 5 moles of individual diol monomer A specifically having the formula HO-R¹-OH to be added and leads to a polymer where only 1/6 of the B" units (-OC-R²-CO-) are from the recycled monomer product. If the ratio of B" units (-OC-R²-CO-) to individual monomer B (HOOC-R²-COOH) is higher, then a higher amount of recycled condensation monomer A'-B"-A' having the formula HO-R¹-OOC-R²-COO-R¹-OH is used for the preparation of the polyester.

For example, if 2 moles of condensation monomer A'-B"-A' having the formula HO-R¹-OOC-R²-COO-R¹-OH are combined with 4 mole of individual diacid monomer B (HOOC-R²-COOH), the complete polymerization will lead to A'-B"-[A"-B"]₅-A' specifically having the formula HO-R¹-OOC-R²-CO-[O-R¹-OOC-R²-CO]₅-O-R¹-OH. This requires only 3 moles of individual diol monomer A specifically having the formula HO-R¹-OH to be added and leads to a polymer where 1/3 of the B" units (-OC-R²-CO-) are from the recycled monomer product. Therefore, it is advantageous to keep the mole ratio of B" units (-OC-R²-CO-) to individual monomer B (HOOC-R²-COOH) in the slurry above 1:4 (i.e. the ratio should not become smaller than 0.25), preferably above 1:3 and more preferably above 1:2.

As seen from above calculations and according to one embodiment the present invention, it may be necessary to prepare the slurry in a way that the slurry contains individual diol monomer A specifically having the formula HO-R¹-OH. Individual diol monomer A may already be present in the recycled monomer product. Individual diol monomer A may also be added to the recycled monomer product before or after the addition of individual diacid monomer B (HOOC-R²-COOH). Optionally, individual diol monomer A may be added to the recycled monomer product together with individual diacid monomer B. The amount of added individual diol monomer A should be limited to limit required evaporation of individual diol monomer A in the subsequent polymerization reaction. While a small amount of evaporation of individual diol monomer A is an integral part of polymerization processes, excessive amounts of such evaporation should be avoided to minimize energy consumption.

According to a preferred embodiment of the present invention, the required amount of individual diol monomer A specifically having the formula HO-R¹-OH depends on the amount of B" units (-OC-R²-CO-) and the amount of individual diacid monomer B (HOOC-R²-COOH) in the slurry. The required amount of individual diol monomer A specifically having the formula HO-R¹-OH is between a minimum value Aₘᵢₙ and a maximum value Aₘₐₓ,
where Aₘᵢₙ = 1.08 * diacid - 0.92 * B" units and
Aₘᵢₙ >= 0
and Aₘₐₓ = 1.75 * diacid - 0.25 * B" units
where individual diol, Aₘᵢₙ, Aₘₐₓ, B" units and diacid are expressed in mole amounts.

The lower limit for Aₘᵢₙ is 0. In this case sufficient condensation monomer A'-B"-A' having the formula HO-R¹-OOC-R²-COO-R¹-OH is present to supply all the required amount of reacted A units (A' and A").

The upper limit for Aₘₐₓ is achieved with a mole ratio of B" units (-OC-R²-CO-) to diacid monomer B (HOOC-R²-COOH) of 1:5 at 8.5 moles monomer A per 6 moles of total B units.

A more preferable value for Aₘₐₓ is 6.5 moles individual monomer A (HO-R¹-OH) per 6 moles of total B units. This more preferable upper limit for Aₘₐₓ is achieved with a mole ratio of B" units (-OC-R²-CO-) to individual monomer B (HOOC-R²-COOH) of 1:2 or above that.

Further preferred is Aₘₐₓ = 1.5 * individual monomer B (HOOC-R²-COOH) - 0.5 * B" units (-OC-R²-CO-).

This leads to an upper limit for Aₘₐₓ with a mole ratio of B" units (-OC-R²-CO-) to individual monomer B (HOOC-R²-COOH) of 1:5 at 7 moles individual monomer A (HO-R¹-OH) per 6 moles of total B units.

Most preferred is an upper limit for Aₘₐₓ of 1 mole individual monomer A (HO-R¹-OH) per 1 mole of total B units.

According to the present invention, the monomer slurry described above is used for the polymerization of a polyester.

The preparation of polyesters has been well described. Various methods for the preparation of polyesters are described in "Modern Polyesters; Wiley Series in polymer Science; 2003; Edited by John Scheirs" (typical examples in chapters 2, 8, 9 and 11).

Typical preparation processes comprise the direct reaction of equal amounts of individual monomers A and B, leading to polyesters with the repeat unit structure [A"-B"-]ₙ specifically having the formula [-O-R¹-OOC-R²-CO-]ₙ which may be terminated by either A' (HO-R¹-O-) and/or B' units (-OC-R²-COOH). During the reaction, low molecular weight reaction products may form which have to be removed by evaporation.

Other, so called two step, processes use individual monomer B (HOOC-R²-COOH) and an excess of individual monomer A (HO-R¹-OH) in a first step to form a prepolymer with the repeat unit structure [A"-B"-]ₙ specifically having the formula [-O-R¹-OOC-R²-CO-]ₙ, where n is a small number of preferably less than 20 and which is mostly terminated by A' units (HO-R¹-O-). During the reaction, low molecular weight reaction products may form, which have to be removed by evaporation.

In a second step, the prepolymer continues to react leading to polyesters with the repeat unit structure [A"-B"-]ₙ specifically having the formula [-O-R¹-OOC-R²-CO-]ₙ, which may be terminated by either A' (HO-R¹-O-) and/or B' units (-OC-R²-COOH). Excess individual monomer A (HO-R¹-OH) is removed by evaporation during the second stage.

An alternative option of the two step processes uses substituted monomer C and an excess of individual monomer A (HO-R¹-OH) to form a prepolymer the repeat unit structure [A"-B"-]ₙ specifically having the formula [-O-R¹-OOC-R²-CO-]ₙ, where n is a small number of preferably less than 20 and which is mostly terminated by A' units (HO-R¹-O-). During the reaction, low molecular weight reaction products may form which have to be removed by evaporation. In a second step, the prepolymer continues to react leading to polyesters with the repeat unit structure [A"-B"-]ₙ specifically having the formula [-O-R¹-OOC-R²-CO-]ₙ, which may be terminated by either A' (HO-R¹-O-) and/or B' units (-OC-R²-COOH). Excess individual monomer A (HO-R¹-OH) is removed by evaporation during the second stage.

Many polyesters have at least one individual monomer A or B which is a liquid at ambient conditions. Typically the diol, individual monomer A (HO-R¹-OH), is a liquid. This allows to feed the individual monomers as a liquid to the polyester polymerization. If one monomer is liquid and a second monomer is solid, the solid monomer may be dispersed in the liquid monomer, forming a slurry of individual monomers, which is fed to the polyester polymerization.

A conventional plant designed to prepare a polyester from its individual monomers A and B therefore comprises a unit configured to prepare a slurry from individual monomers A and B. This slurry preparation unit has associated supply units which allow providing individual monomer A in liquid form and individual monomer B in solid form. The resulting slurry is then fed to the subsequent step of polyester polymerization.

It is therefore desirable to also provide the monomer slurry of the present invention in liquid form to the polyester polymerization. However, in contrast to conventional plants, feeding the monomer slurry of the present invention requires heating to obtain and/or maintain the monomer slurry in liquid form. At a minimum, the monomer slurry has to be maintained at a temperature above the melting temperature of the recycled monomer product, which contains the condensation monomer having the formula HO-R¹-OOC-R²-COO-R¹-OH. Typically, the monomer slurry should be at a temperature at or above 70°C up to 200°C, preferably at or above 90°C, more preferably at or above 105°C when feeding to polyester polymerization. Most preferably, the monomer slurry is above the melting point of the condensation monomer having the formula HO-R¹-OOC-R²-COO-R¹-OH when feeding the slurry to polyester polymerization.

Therefore, it is preferable to maintain the unit for the preparation of the slurry at a temperature at or above 70°C up to 200°C, preferably at or above 90°C, more preferably at or above 105°C. It is most preferable to maintain the unit above the melting point of the condensation polymer having the formula HO-R¹-OOC-R²-COO-R¹-OH.

To maintain that required temperature, the unit for the preparation of the slurry is equipped with heating means, which are sufficient to maintain a temperature at or above 70°C up to 200°C, preferably at or above 90°C, more preferably at or above 105°C. Most preferably, the heating means are sufficient to maintain a temperature above the melting point of the condensation polymer having the formula HO-R¹-OOC-R²-COO-R¹-OH.

In contrast to conventional plants, a supply unit is required which allows to feed recycled monomer product either in solid form at a temperature below its melting temperature or at a temperature sufficient for the recycled monomer product to be supplied in molten form, which requires temperatures at or above 70°C up to 200°C, preferably at or above 90°C, more preferably at or above 105°C.

The supply unit for solid recycled monomer product may be any unit that allows providing solid recycled monomer product in controlled amounts, while maintaining the recycled monomer product in solid form. Examples are screws, rotary airlocks, chain conveyors or pneumatic conveying systems.

The supply unit for liquid recycled monomer product may be any unit that allows providing liquid recycled monomer product in controlled amounts, while maintaining the recycled monomer product in liquid form. Examples are extruders, pumps or vessels with outlet valves that control the downflow from a vessel. Preferably, the supply unit is at the same time equipped with incorporated or downstream heating means to melt the monomer product.

As indicated above, the recycled monomer product may be solid at ambient conditions. In a preferred embodiment of the present invention, the slurry preparation unit of a plant designed to prepare a polyester is executed in a way that allows to melt the monomer product and to maintain the monomer product in molten state while the monomer slurry is formed.

Alternatively, a supply unit is provided that provides the recycled monomer product in molten state. In this case, the slurry preparation unit of a plant designed to prepare a polyester is executed in a way that allows maintaining the recycled monomer product in molten state while the monomer slurry is formed.

In a further preferred embodiment of the present invention, the monomer slurry of the present invention may be added as a solid to the slurry preparation unit. In this case, the monomer slurry is solidified before addition to the polyester preparation unit. Such intermediate solidification may be desirable if the slurry has to be stored or transported to a different location.

In this embodiment of the present invention, the slurry preparation unit of a plant designed to prepare a polyester is executed in a way that allows to melt the monomer slurry and to maintain the monomer slurry in molten state.

According to the present invention, the monomer slurry may contain water and/or inert solvent in the range of 5 to 50% by weight, based on the entire amount of the slurry. It is preferred according to the present invention to evaporate at least a portion of the water and/or inert solvent. Therefore, the slurry preparation unit is executed in a way that allows maintaining the monomer slurry in molten state while evaporating at least a portion of the water and/or inert solvent.

The monomer slurry may contain additives such as catalysts, colorants, anti-oxidants, stabilizers or inorganic fillers. These additives may be added during the production of the recycled monomer product. These additives may also be added to the stream of recycled monomer product or to the stream of diacid monomer B (HOOC-R²-COOH) entering the slurry preparation unit. Alternatively, the additives may also be added to the slurry. The additives may be added in pure form, as a blend of additives or together with a liquid. Typically, such additives are dissolved or dispersed in individual monomer A (HO-R¹-OH).

After slurry preparation, the polymerization process of the polyester commences identical or at least very similar to processes known from virgin polymer polymerization. Small differences may result from different mole ratios which influence the evaporation of volatile components. Other differences may result from different (typically higher) feed temperatures of the monomer slurry. Especially when high amounts of condensation monomer A'-B"-A having the formula HO-R¹-OOC-R²-COO-R¹-OH are introduced, the first step of the reaction is facilitated leading to shorter residence times, lower amounts of evaporating reaction products, the possibility to reduce reaction pressure and consequently the possibility to obtain higher production rates.

According to a preferred embodiment of the present invention, the recycled monomer product is obtained by depolymerization of a polyester. According to a preferred embodiment of the present invention, obtaining the recycled monomer product comprises the steps:
a1) providing a waste stream comprising a polyester with the repeat unit [-A"-B"] having the formula [-O-R¹-OOC-R²-CO-],
a2) forming a blend comprising the waste stream and at least one diol monomer HO-R¹-OH or terminating molecule R³-OH, wherein R³ is an aliphatic hydrocarbon group containing 1 to 15 carbon atoms, which is capable of reacting with the polyester,
a3) exposing the blend obtained in step b) in a reaction vessel to conditions suitable for a depolymerization of the polyester.

The waste stream may be any stream which predominantly comprises polyester. It may further contain contaminants. The waste stream may result from post-industrial or post-consumer waste. Such waste may be in the form of articles, like containers or fabrics, or it may be in the form of intermediate products like sheets, fibre rolls or preforms for containers, or it may be in the form of raw materials like pellets or shredded solidified melt.

Forming the blend comprises any form of mixing and mixing devices that can be used to mix a typically solid waste stream and a typically liquid monomer. Alternatively, it comprises any form of mixing and mixing devices that can be used to mix a typically solid waste stream and a solid monomer.

The conditions suitable for depolymerization of the polyester in the waste stream are well known in the industry. As an example, various methods for the depolymerization of PET are described in "Recycling of Polyethylene Terephthalate Bottles; Elsevier; 1^{st} ed. 2018, Edited by Sabu Thomas". According to the present invention, depolymerization conditions must be sufficient to obtain a monomer product which predominantly consists of a condensation monomer with the structure A'-B"-A' having the formula HO-R¹-OOC-R²-COO-R¹-OH.

Before, during and after depolymerization, various steps for purifying the recycled monomer product can be used. Those steps are well known in the industry and may include elements from the following, not limiting list:
- Separation of foreign substances by optical sorting.
- Separation of foreign substances by density separation from the initial polyester and/or its depolymerization products.
- Filtration of solid particle contaminants from a melt and/or a solution of the polyester and/or its depolymerization products.
- Adsorption of contaminants from depolymerization products.
- Filtration of oligomers and/or dimers from depolymerization products.
- Dissolving, crystallization and filtration of monomer products.
- Evaporation and condensation of monomer products.

According to the present invention the recycled monomer product may contain substances which are liquid at normal conditions. Such liquids comprise individual monomer A (HO-R¹-OH) with a melting point below 20°C, water or inert solvents. The amount of such liquid should be limited to 50% by weight of the entire recycled monomer product, as water, inert liquids and excessive amounts of individual monomer A have to be evaporated before or during polymerization of the polyester. Preferably the amount of such liquid is limited to 35% by weight of the entire recycled monomer product. Nevertheless, the presence of such liquids may be desirable as they reduce the melting point of the recycled monomer product. For a sufficient reduction of the melting point at least 5%, preferably 10% of liquid are required, based on the entire amount of the recycled monomer product.

In one preferred embodiment of the present invention, the recycled monomer product is stored as a liquid at a temperature below the melting point of the condensation monomer A'-B"-A' having the formula HO-R¹-OOC-R²-COO-R¹-OH. In one preferred embodiment of the present invention, the recycled monomer product is transported as a liquid from a first location to a second location at a temperature below the melting point of the condensation monomer A'-B"-A' having the formula HO-R¹-OOC-R²-COO-R¹-OH. Such lowered transport or storage temperatures are desirable if side reactions may occur during transport and storage time at the melting temperature of the condensation monomer A'-B"-A' having the formula HO-R¹-OOC-R²-COO-R¹-OH.

In one preferred embodiment of the present invention, the recycled monomer product is released from transport or storage containers as a liquid at the second location at a temperature below the melting temperature of the condensation monomer A'-B"-A' having the formula HO-R¹-OOC-R²-COO-R¹-OH. Such lowered release temperatures are desirable to quickly liquefy a recycled monomer product which is a sticky solid or paste like, and therefore makes the extraction from the transport or storage container difficult.

In one preferred embodiment of the present invention, the diacid monomer B (HOOC-R²-COOH) is added to the recycled monomer product in liquid form at a temperature below the melting temperature of the condensation monomer A'-B"-A' having the formula HO-R¹-OOC-R²-COO-R¹-OH. Such lowered mixing temperatures are desirable to increase the viscosity of the monomer product which facilitates the dispersion of monomer B in the monomer product.

Substances which are liquid at ambient conditions and are contained in the recycled monomer product may be residual liquids from the preparation of the recycled monomer product, such as residual reactants or liquids used in a step to purify the recycled monomer product. Such liquids may also originate from an intentional addition of monomer A (HO-R¹-OH) or from the addition of an additive which is dissolved or dispersed in a liquid.

Substances which are liquid at ambient conditions and are contained in the recycled monomer product may be fully or partially evaporated before, during or after the addition of monomer B (HOOC-R²-COOH). This is especially of interest if the liquids comprise water or inert solvents which are not required for the subsequent polymerization of the polyester.

In one preferred embodiment of the present invention, the recycled monomer product is obtained by crystallization from a solution containing water and/or an inert solvent. After filtration the recycled monomer product contains up to 50% by weight residual water and/or inert solvent, based on the entire amount of recycled monomer product. The wet recycled monomer product is melted to provide a recycled monomer product in liquid form. Individual monomer B (HOOC-R²-COOH) is added to the wet recycled monomer product melt to obtain a monomer slurry. Preferably before and/or during the addition of individual monomer B (HOOC-R²-COOH), water and/or inert solvent is evaporated. The evaporation of water and/or inert solvent does not have to be complete as some water and/or inert solvent can be typically evaporated during the polymerization of the polyester.

Preferably the evaporation of water and/or inert solvent and the mixing of the recycled monomer product with monomer B (HOOC-R²-COOH) occur in a common vessel.

Such a vessel is preferably equipped with an inlet opening for the recycled monomer product in liquid or solid form, as well as an inlet opening for individual monomer B (HOOC-R²-COOH) in solid form. If the recycled monomer product is provided in solid form, sufficient distance between the inlet openings should be provided to allow the melting of the recycled monomer product before individual monomer B (HOOC-R²-COOH) is added. It is possible, however, that individual monomer B (HOOC-R²-COOH) entering the vessel may be combined with recycled monomer product still in solid form, as long as the recycled monomer product is subsequently molten in the same vessel.

Another embodiment of the present invention comprises a premixing of the recycled monomer product and the individual monomer B (HOOC-R²-COOH) in solid form, and a subsequent melting and mixing to obtain a monomer slurry.

The vessel may be further equipped with an outlet opening for the monomer slurry in liquid form. This opening is preferably located at the lower end of the vessel and in general at an opposing end to the inlet opening for the recycled monomer product. The opening preferably is controllable by a valve to regulate the flow of the slurry from the vessel.

The vessel may be further equipped with an outlet opening for substances which are liquid or in gaseous form at ambient conditions. This opening is preferably connected to condensing means which allow the recovery of evaporated liquids.

The vessel may be further equipped with mixing means. Such mixing means may comprise stirring blades or paddles on a rotating shaft or a single screw or parallel screws.

The vessel may be further equipped with heating means. Such heating means may constitute mantle heating or heated element inside the vessel. Optionally a return flow of heated slurry may support the heating.

The vessel for the preparation of the monomer slurry may be an addition to the design of a process to produce a polyester. In this case, the vessel becomes part of the supply unit for the recycled monomer product.

Alternatively, the vessel may replace the vessel for the preparation of a monomer slurry predominantly made from individual monomer A (HO-R¹-OH) and individual monomer B (HOOC-R²-COOH) of a conventional process to produce a polyester. In one preferred embodiment of the present invention, the existing vessel for the preparation of a monomer slurry predominantly made from individual monomer A and individual monomer B is fitted with additional heating means to allow the preparation of a monomer slurry according to the present invention.

In one preferred embodiment of the present invention, the recycled monomer product is obtained by crystallization from a solution containing water and/or an inert solvent. After filtration the monomer product contains up to 50% by weight residual water and/or inert solvent, based on the entire amount of recycled monomer product. To reduce the amount of water, the crystallized recycled monomer product may be contacted with monomer A (HO-R¹-OH) and separated by additional filtration from the excess liquid. The obtained wet recycled monomer product is melted to provide a recycled monomer product in liquid form. This additional filtration step reduces the amount of required evaporation during slurry formation and/or polymerization of the polyester.

In one preferred embodiment of the present invention, the slurry is cooled, solidified and converted to particles. The conversion to particles can occur before (e.g. by a spray or droplet technology), during or after solidifying.

The particles may be formed by any suitable particle forming technology. This includes granulation like hot die-face cutting, droplet granulation or spray congealing. It includes contacting the substance to be solidified with cold surfaces, like roto-forming or drum flaking. The particles may be in the form of pellets, flakes or powder. The particles may be further treated to provide particles in a defined size range. This includes grinding, screening or air sifting.

Typical particle sizes are in the area of several micrometres to several centimetres. For handling, storage and transporting defined particles in the range of 0.3 mm to 3 cm are preferred.

Depending on the amount of substances which are liquid at ambient conditions and present in the particles, the solidified particles may be brittle or ductile. They may be free flowing or sticky with a tendency to form agglomerates. For handling, storage and transporting free-flowing particles are preferred.

It is an advantage of the present invention that a recycled monomer product with residual liquid may initially have a tendency to form agglomerates, but after the addition of diacid monomer B (HOOC-R²-COOH) a slurry is obtained which does not exhibit the same stickiness after solidification. Such a free-flowing slurry may be stored and transported without the risk of clumping.

It is a further advantage of the present invention that in cases where the production of individual monomer B (HOOC-R²-COOH) and the polyester derived from it are in different locations, the production of a slurry at the location of production of the individual monomer B (HOOC-R²-COOH) can simplify logistics of recycled and virgin monomers to a production facility for the polyester.

Whereas individual monomer A (HO-R¹-OH) comprises the group of diols in unreacted form, monomer units A' (HO-R¹-O-) and A" (-OR¹-O-) comprise reacted diol units. Whereas individual monomer B (HOOC-R²-COOH) comprises the group of diacids in unreacted form, monomer units B' (HOOC-R²-CO-) and B" (-OC-R²-CO-) comprise reacted diacid units.

A preferred embodiment of the present invention requires that monomer A (HO-R¹-OH) comprises at least 90% of ethylene glycol (EG), wherein the percentage is calculated as mole percent of the total amount of individual monomer A, and monomer B (HOOC-R²-COOH) comprises at least 90% of terephthalic acid (TPA), wherein the percentage is calculated as mole percent of the total amount of individual monomer B.

Other suitable forms of monomers may comprise any comonomers typically used in manufacturing polyesters, like isophthalic acid (IPA), cyclohexanedimethanol (CHDM) or diethylene glycol (DEG).

The polyesters made from these monomers belong to the group of polyethylene terephthalates and their copolymers (PET) with a dominant repeat unit [TPA-EG-].

When using PET with EG as individual monomer A for depolymerization, the main monomer product will be bis(hydroxyethyl)terephthalate (BHET). Upon re-polymerization, again PET will be obtained. Based on the present invention the PET is formed by adding TPA to the BHET.

As an alternative, monomer R³-OH, preferably methanol, may be used for depolymerization. Upon reaction with individual monomer A (HO-R¹-OH), again BHET will be obtained.

The depolymerization product from PET and EG may further contain dimers and oligomers of BHET. While the majority of such dimers and oligomers are terminated by OH end groups, some COOH end groups will be present. The depolymerization product may also contain monohydroxyethylterephthalate (MHET) and TPA. It is obvious that in the presence of comonomers also the side products, the dimers and oligomers may contain a part of the comonomers. Especially DEG may replace EG as reacted monomer A' or A". Optionally, the purifying steps after depolymerization may comprise steps by which the amount of MHET is reduced. Also, optionally the purifying steps after depolymerization may comprise steps by which the amount of DEG, CHDM and/or IPA substituted BHET and its oligomers is reduced. Optionally, such reduction is the result of evaporating and condensing BHET or of dissolving, crystallizing and filtering BHET rich depolymerization product. The same preferred ranges apply as defined above for the general polyesters.

One preferred embodiment of the present invention is related to solid particles comprising:
- recycled monomer product, wherein the recycled monomer product contains 50-100 w-% of a condensation monomer having the formula HO-R¹-OOC-R²-COO-R¹-OH,
- diacid monomer B having the formula HOOC-R²-COOH at a mole ratio of B" units -OC-R²-CO- to individual diacid monomer B HOOC-R²-COOH in the range of 5:1 to 1:5, wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms.

Preferably, the mole ratio of B" units -OC-R²-CO- to individual monomer B HOOC-R²-COOH is lower than 4:1, more preferably lower than 3:1. As the mole ratio decreases from the upper limit, the amount of individual monomer A (HO-R¹-OH) that has to be evaporated during polymerization is reduced.

Preferably, the mole ratio of B" units -OC-R²-CO- to individual monomer B HOOC-R²-COOH is higher than 1:3 (i.e. greater than about 0.33), more preferably higher than 1:2. As the mole ratio increases from the lower limit, the amount of individual monomer A (HO-R¹-OH) that has to be added during polymerization is reduced. At the same time, the recycled content in the resulting polyester increases.

In an ideal case where the solid particles are the only source for units A" (-O-R¹-O-) and B" (-OC-R²-CO-) and the evaporation of individual monomer A (HO-R¹-OH) is within the typical limits of an existing polymerization plant, the mole ratio is in the range 2:1 to 1:1.

According to a preferred embodiment of the present invention, the solid particles comprise:
- recycled monomer product, wherein the recycled monomer product contains 50-100 w-% of a condensation monomer having the formula HO-R¹-OOC-R²-COO-R¹-OH,
- diacid monomer B having the formula HOOC-R²-COOH at a mole ratio of B" units -OC-R²-CO- to individual diacid monomer B HOOC-R²-COOH in the range of 3:1 to 1:4, wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms
- diol monomer A (HO-R¹-OH) at a mol ratio of total amount of B units to individual monomer A (HO-R¹-OH) in the range of 6:1 to 1: 1.35.

Preferably, the mole ratio of B" units (-OC-R²-CO-) to monomer B (HOOC-R²-COOH) is lower than 2:1, more preferably lower than 1.5:1. As the mole ratio decreases from the upper limit, the amount of individual monomer A (HO-R¹-OH) that can be present in the monomer product increases.

Preferably, the mol ratio of total amount of B units to monomer A (HO-R¹-OH) is below 3:1, more preferably below 2:1.

Preferably, the mole ratio of B" units (-OC-R²-CO-) to individual monomer B (HOOC-R²-COOH) is higher than 1:3, more preferably higher than 1:2. As the mole ratio increases from the lower limit, the amount of recycled content in the resulting polyester increases. However, more of the individual monomer A (HO-R¹-OH) has to be evaporated during polymerization.

Preferably, the mol ratio of total amount of B units to individual monomer A (HO-R¹-OH) is above 1:25, more preferably above 1:1.

In an ideal case where the solid particles are the only source for units A" (-O-R¹-O-) and B" (-OC-R²-CO-) and the evaporation of individual monomer A (HO-R¹-OH) is within the typical limits of an existing polymerization plant, the mole ratio is in the range 1:2 to 1:1 and the mol ratio of total amount of B units to individual monomer A (HO-R¹-OH) in the range of 1.5:1 to 3:1.

The descriptions, definitions and calculations for the recycled monomer product and the monomers therein as well as for the related polyesters and the monomer units therein plus their monomers and depolymerization products apply in an analogous manner to the particles as for the process described above.

A preferred particle of the present invention comprises:
- 1 to 2 moles recycled BHET
- plus 1 mole TPA
- with a water content of up to 50% by weight of the total particle.

Another preferred particle of the present invention comprises:
- 2 to 3 moles recycled BHET
- plus 3 to 4 moles TPA
- plus 2 to 4 moles of EG
- with a water content of up to 40% by weight of the total particle.

Such particles may contain comonomers and side products as explained above.

## Claims

1. A method for the preparation of a polyester with a repeat unit [-A"-B"] having the formula [-O-R¹-OOC-R²-CO-], comprising the steps:
a) providing a recycled monomer product, where the monomer product contains 50%-100% of a condensation monomer having the formula HO-R¹-OOC-R²-COO-R¹-OH,
b) adding at least one diacid monomer B having the formula HOOC-R²-COOH to the recycled monomer product of step a), to obtain a monomer slurry,
c) using the monomer slurry from step b) for the polymerization of a polyester with the repeat unit [-A"-B"] having the formula [-O-R¹-OOC-R²-CO-],
wherein R¹ and R² are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms,
**characterized in that** the step of preparing said monomer slurry in step b) is executed in a way that allows maintaining the monomer slurry in liquid form.

2. The method according to claim 1, **characterized in that** the monomer slurry after step b) has
- a mole ratio of B" units (-OC-R²-CO-) to diacid monomer B having the formula HOOC-R²-COOH in the range of 5:1 to 1:5 and
- an amount of diol monomer A having the formula HO-R¹-OH between a minimum value Aₘᵢₙ and a maximum value Aₘₐₓ, where Aₘᵢₙ = 1.08 * diacid - 0.92 * B" units and
Aₘᵢₙ >= 0
and Aₘₐₓ = 1.75 * diacid - 0.25 * B" units
where individual diol, Aₘᵢₙ, Aₘₐₓ, B" units and diacid are expressed in mole amounts.

3. The method according to one of the preceding claims, **characterized in that** the diacid HOOC-R²-COOH added to prepare the monomer slurry is added without diol HO-R¹-OH or with an amount of diol HO-R¹-OH below the amount of diacid HOOC-R²-COOH, wherein the calculation is based on mole amounts.

4. The method according to one of the preceding claims, **characterized in that** the step a) of providing the recycled monomer product comprises the steps of
a1) providing a waste stream comprising a polyester with the repeat unit [-A"-B"] having the formula [-O-R¹-OOC-R²-CO-],
a2) forming a blend comprising the waste stream and at least one diol monomer HO-R¹-OH or terminating molecule R³-OH wherein R³ is an aliphatic hydrocarbon group containing 1 to 15 carbon atoms, which is capable of reacting with the polyester,
a3) exposing the blend obtained in step b) in a reaction vessel to conditions suitable for a depolymerization of the polyester.

5. The method according to one of the preceding claims, **characterized in that** the recycled monomer product provided in step a) comprises 5 to 50% by weight of a substance which is liquid at ambient conditions.

6. The method according to claim 5, **characterized in that** either of the steps of:
- using the recycled monomer product for the preparation of a monomer slurry,
- releasing the recycled monomer product from a transport or storage container,
- transporting the recycled monomer product in a transport container,
- storing the recycled monomer product in a storage container
occurs with the recycled monomer product in liquid form at a temperature below the melting temperature of the condensation monomer having the formula HO-R¹-OOC-R²-COO-R¹-OH.

7. The method according to one of the claims 5 and 6, **characterized in that** at least a part of a component of the recycled monomer product which is liquid at ambient conditions is evaporated before or during the preparation of a monomer slurry in step b).

8. The method according to any of the preceding claims, **characterized in that** the slurry obtained in step b) comprises water and/or inert solvent in the range of 5 to 50% by weight, based on the total weight of the slurry, and the preparation of the slurry is executed in a way that allows to maintain the monomer slurry in molten state while evaporating at least a portion of the water and/or inert solvent.

9. The method according to one of the preceding claims, **characterized in that** the monomer slurry obtained in step b) is cooled, solidified and converted to particles before being used in step c), wherein the conversion to particles can occur before, during or after solidifying.

10. The method according to one of the preceding claims, **characterized in that** the diol monomer A comprises more than 90% of ethylene glycol, wherein the percentage is calculated as mole percent of the total amount of diol monomer A, and the diacid monomer B comprises more than 90% of terephthalic acid, where the percentage is calculated as mole percent of the total amount of diacid monomer B.

11. Solid particles comprising :
a. recycled monomer product, wherein the recycled monomer product contains 50-100 w-% of a condensation monomer having the formula HO-R¹-OOC-R²-COO-R¹-OH,
b. diacid monomer B having the formula HOOC-R²-COOH at a mole ratio of B" units -OC-R²-CO- to diacid HOOC-R²-COOH in the range of 5:1 to 1:5, wherein R¹ and R² are the same or different and selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms.

12. Solid particles according to claim 12, **characterized in that** the
mole ratio of B" units to diacid is in the range of 3:1 to 1:4, and the solid particles further comprise
diol monomer A HO-R¹-OH at a mol ratio of total amount of B units to diol in the range of 6:1 to 1: 1.35.

13. Solid particles according to one of the claims 12 and 13, **characterized in that** the particles comprise 5 to 50% by weight of a substance which is liquid at normal conditions.

14. Solid particles according to one of the claims 12 to 14, **characterized in that** the diol monomer A comprises more than 90% of ethylene glycol, where the percentage is calculated as mole percent of the total amount of diol monomer A, and the diacid monomer B comprises more than 90% of terephthalic acid, where the percentage is calculated as mole percent of the total amount of diacid monomer B.
